# EUROPEAN PATENT SPECIFICATION

(11) **EP 1 150 030 B1**
(45) Date of publication and mention of the grant of the patent: **01.12.2004**
(21) Application number: 01105807.0
(22) Date of filing: 08.03.2001
(51) Int. Cl.: F16D 48/06

(54) **Vehicle clutch control device**
Fahrzeugkupplungs-Steuerungsgerät
Dispositif de commande d'embrayage de véhicule

(30) Priority: 24.04.2000 JP 2000127662
(43) Date of publication of application: 31.10.2001
(73) Proprietor: ISUZU MOTORS LIMITED, Shinagawa-ku, Tokyo (JP)
(72) Inventor: Nobuyuki, Nishimura, c/o Isuzu Motors Limited, Kawasaki-chi, Kanagawa (JP); Tetsuya, Shimizu, c/o Isuzu Motors Limited, Kawasaki-chi, Kanagawa (JP)
(74) Representative: Schaumburg, Thoenes, Thurn, Landskron Patentanwälte

(56) References cited:
- EP-A- 1 136 308
- DE-A- 4 341 729
- US-A- 4 401 199
- US-A- 5 117 710
- US-A- 5 403 249

## Description

The present invention relates to a clutch control device for a vehicle provided with an automatic clutch function and an automatic transmission (gear speed change) function, and in particular to such a clutch control device that can eliminate the discomfort upon a sudden start of a vehicle.

Some of recent vehicles are equipped with a controller and actuators that in combination operate various parts of the vehicles automatically. Specifically, the operation of mechanical parts necessary for the vehicle motion is caused not manually upon movements of pedals and levers, but a controller detects the movements of the pedals and levers, and operates the mechanical parts via actuators. Such vehicles are often equipped with an automatic clutch function and automatic transmission function such that the controller automatically determines the appropriate time for changing the gear speed of the transmission, controlling the clutch and the transmission without waiting for the driver's operation.

In vehicles with a conventional automatic clutch function and automatic transmission function, to let the vehicle start move from a halting position, a driver puts (shifts) the gear change lever (shift lever) into a position such as drive or reverse, and the transmission automatically switches to a suitable gear speed, thus preparing the vehicle for start. When the vehicle thus has been prepared for start, it is in a "vehicle start stand-by" condition; the vehicle still stands and the gear position of the transmission is set to a certain start gear. In the "vehicle start stand-by" condition, clutch engaging control is performed in response to the driver's stepping onto the accelerator pedal, which causes the vehicle to start moving. That is to say, when the vehicle start stand-by condition is detected, the amount that the driver has stamped the accelerator pedal or the engine speed is detected. Then, if the engine speed is faster than a predetermined speed, it is assumed that the driver intends to start moving the car, and a clutch engaging control is performed.

On the other hand, if the engine speed is not higher than the predetermined speed, for example when the driver is not stepping on the accelerator pedal, then it is assumed that the driver does not intend to start moving the car. Thus, the clutch engaging control is not performed, and the vehicle stays in the vehicle start stand-by state.

However, when the engine's idling speed is increased, for example due to warming up or overload of the air condition, or when a driver has stepped on the accelerator pedal to check the engine (racing), and the driver shifts the speed change lever to a start gear position, then the vehicle is brought into the vehicle start stand-by condition. Likewise, when the gear change lever is abusively put into a start position (that is, in an action discouraged by the manual) or erroneously while the accelerator pedal is depressed down considerably, then the vehicle goes into the start stand-by state. Subsequently, the vehicle starts moving due to the automatic clutch function since the engine speed is higher than the predetermined speed. As a result, a sudden start of the vehicle occurs upon engaging of the clutch, and the driver will experience the impact of this sudden start, i.e., the discomfort due to a jerking movement.

EP 1 136 308 A2 which was cited as prior art pursuant to Art. 54(3) and (4) EPC discloses a vehicle clutch control system for a selective clutch that prevents interference with automatic engagement/disengagement of a friction clutch when manual engagement/disengagement is selected at the time of starting a vehicle. The clutch disengagement and engagement by the auto-clutch device may be prohibited when all the following conditions are fulfilled: the vehicle velocity is zero, a current gear speed or a target gear speed is other than neutral, and a gear speed prior to the current gear speed or the target gear speed is the neutral. The prohibition may be cancelled if a gear changing state is detected, or if the clutch pedal is released and a rotational speed of the friction clutch exceeds a prescribed value suitable for disengaging of the friction clutch.

US 5117710 A discloses a shift control device of an automatic transmission causing the transmission to be forcedly shifted to a parking range or neutral range when the shift ranges indicated by a shift instruction signal produced by a manually operable range selector and a current shift range signal produced by a detector are not coincident with each other. In this way an abnormal shift control may be detected in which the transmission is not shifted as instructed by the range selector lever.

It is an object of the present invention to provide a vehicle clutch control device that can eliminate the aforementioned problems.

In order to attain this object, the present invention provides a vehicle clutch control device that includes a clutch actuator unit for engaging and disengaging a friction clutch, and a controller for prohibiting the clutch actuator unit from engaging the clutch when a vehicle speed is zero and a start gear is selected, but a rotational speed of an engine is higher than a predetermined speed.

The controller may cause the engine rotational speed to drop below the predetermined speed when it prohibits the clutch actuator unit from engaging the clutch. The controller may further allow the clutch actuator unit to engage the clutch when the engine rotational speed drops below the predetermined speed. The controller may hold an accelerator opening of the engine to a predetermined value (e.g., 0%) until the engine rotational speed drops below the predetermined speed.

The controller may hold an accelerator opening of the engine to a predetermined value (e.g., 0%) for a prescribed period after it prohibits the clutch actuator unit from engaging the clutch, and may allow the clutch actuator unit to engage the clutch after the prescribed period regardless of the engine rotational speed. The prescribed period is, for example, about 5 seconds.

Additional objects, aspects and advantages of the present invention will become apparent to those skilled in the art to which the present invention relates from the subsequent description of the embodiment(s) and the appended claims, taken in conjunction with the accompanying drawings.

Fig. 1 illustrates a flowchart of the procedure for preventing vehicle start performed by a clutch control device in an embodiment of the present invention.

Fig. 2 illustrates a diagram of the main parts of a vehicle using the clutch control device of the present invention.

Fig. 3 illustrates a detail of the multi-speed transmission system and the pneumatic cylinder system in Fig. 2.

Fig. 4 illustrates the actuator system in the clutch control device of the present invention.

Fig. 5 is a graph used for clutch position control in accordance with the present invention.

The following is a detailed description of a preferred embodiment of the present invention.

Clutch control devices in accordance with the present invention may be used, for example, in vehicles employing multi-speed transmission systems. Main components of such a vehicle will first be described.

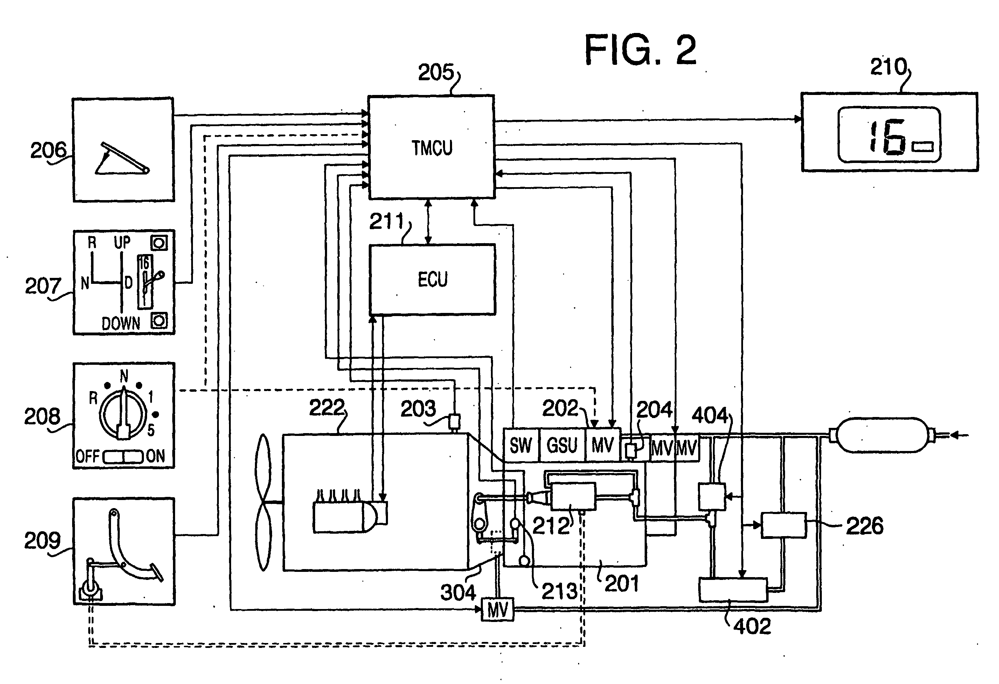

Referring to Fig. 2, such a vehicle includes an engine 222, a friction clutch 304, a multi-speed transmission system 201 which is coupled to the engine 222 over the friction clutch 304, and a pneumatic cylinder system 202 which serves as the actuator for the multi-speed transmission system 201. An engine speed sensor 203 (engine speed detection means) is attached to the engine 222 to detect the engine revolution speed. An output shaft speed sensor 204 (means for detecting the vehicle speed) is attached to the transmission 201 to detect the revolution speed of the output shaft of the transmission 201 as vehicle speed information. A controller (TMCU) 205 for the multi-speed transmission 201 constitutes the clutch control means controlling the engaging and disengaging of the clutch 304 and the transmission control means controlling the change of the gear speeds of the multi-speed transmission system 201. An accelerator sensor 206 detects an accelerator opening desired by the driver based on how deep the accelerator pedal has been stamped. A gear change lever unit 207 communicates gear changes performed by a driver to the transmission controller 205. An automatic/manual (A/M) toggle switch is provided at a top of a shift lever stem for setting the operation of the transmission to automatic or manual operation mode. An emergency gear change switch 208 allows the driver to forcibly select a gear speed in special circumstances, such as emergencies. A clutch pedal 209 is stamped and released by the driver to disengage and engage the clutch 304 in the manual operation mode. A gear display 210 in the dashboard console displays the currently selected gear as a number. An engine control unit (ECU) 211 is associated with the engine 222 and constitutes the engine control means instructing the engine of the controlled accelerator opening and the fuel injection time. A clutch actuator 212 is associated with the clutch 304 to engage and disengage the clutch 304. A clutch stroke sensor 213 is used to detect a position of the actuator 212. Reference numeral 226 designates a valve for maintaining an air pressure.

The transmission controller 205 receives signals indicative of the vehicle's running status from the engine speed sensor 203, the output shaft speed sensor 204 and other sensors/detectors, and reads data from shift-down and shift-up maps from its memory. The transmission controller 205 can perform various processes at time intervals of several dozen ms by multi-timer interrupts. The transmission controller 205 and the engine controller 211 are connected by a bus cable and can communicate with one another. The gear change lever 207 has the stable positions of reverse (R), neutral (N), drive (D) and hold (H), as well as the momentary positions of shift-up operation request (UP) and shift-down operation request (DOWN).

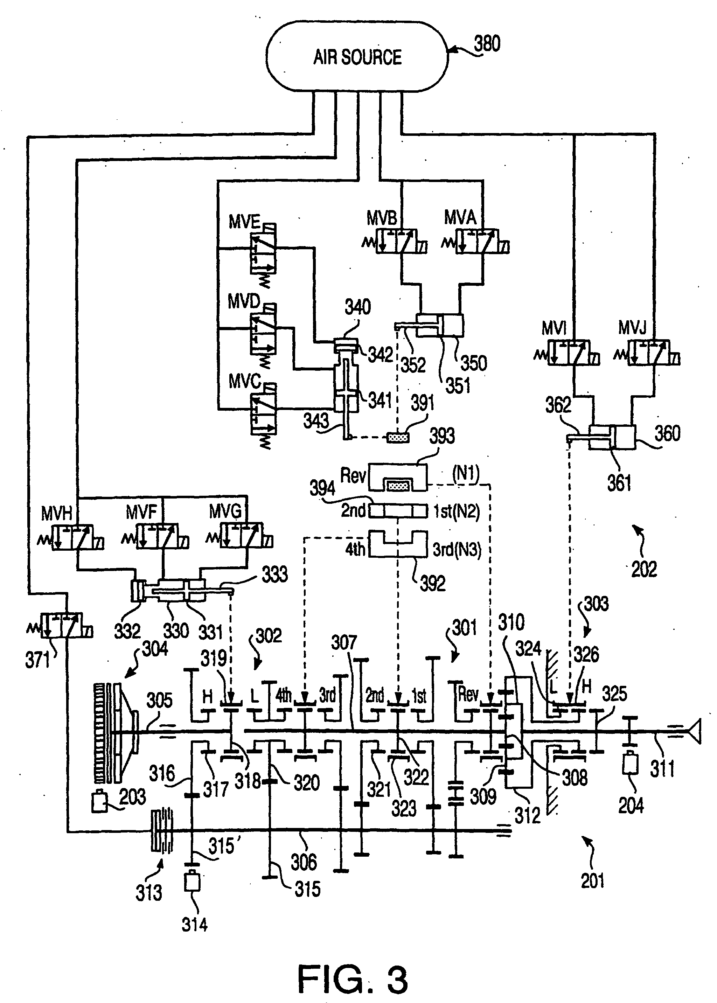

The detail of the multi-speed transmission system 201 and the pneumatic cylinder system 202 shown in Fig. 2 will be described with reference to Fig. 3.

In the multi-speed transmission system 201, a two-speed transmission splitter 302 whose transmission ratio is relatively small is located prior to a 4-speed main gear box 301, and a 2-speed transmission range 303 whose transmission ratio is relatively large is located behind the main bear box 301. The splitter 302 has the three positions, i.e., high speed (H), low speed (L) and neutral. A splitter gear 316, a splitter dog gear 317, and a sleeve 319 are arranged inside the splitter 302. The splitter gear 316 is normally engaged with a counter gear 315' on a counter shaft 306. The splitter dog gear 317 is formed in one piece with the splitter gear 316. The sleeve 319 is normally engaged with an input shaft gear 318 formed in one piece with the input shaft 305, and can engage with either the splitter dog gear 317 or another dog gear 321 in the main transmission 301 (described below). The splitter 302 can transmit the rotation of the input shaft 305, taken from a driven plate of the clutch 304, at the transmission ratio H or L to the counter shaft 306, or block it.

The main transmission 301 has six positions, i.e., 1st, 2nd, 3rd, 4th, reverse and neutral. A plurality of counter gears 315, a plurality of main gears 320, a plurality of dog gears 321, and a plurality of sleeves 323 are arranged inside the main transmission 301. The counter gears 315 are formed in one piece with the counter shaft 306. The main gears 320 are normally engaged with the corresponding counter gears 315. The dog gears 321 are formed in one piece with the main gears 320. The sleeves 323 are normally engaged with main shaft gears 322 formed in one piece with the main shaft 307, and can engage with adjacent dog gears 321. When the splitter 302 is in the L position, the rotation of the input shaft 305 is transferred to the counter shaft 306 at the lower ratio and causes the dog gears 321 to rotate relatively slowly in the main transmission 301. Upon sliding one of the sleeves 323 over one adjacent dog gear 321, one of the four forward speeds or the reverse is selected in the main gear transmission 301 at the engaged dog gear so that the rotation of the input shaft is transferred to the main shaft 307. The sleeves 323 are actuated by the pneumatic cylinder system 202. If no sleeves 323 are slid, the rotations of the dog gears 321 are not transferred to the main shaft 307, i.e., blocked in the main transmission 301. On the other hand, when the splitter 302 is in the H position, the rotation of the input shaft 305 is transferred to the counter shaft 306 at the higher ratio, and the dog gears 321 are caused to rotate at a relatively high speed. Upon sliding one sleeve 323, one of the four forward speeds or the reverse is selected and the rotation of the engaged dog gear is transferred to the main shaft 307. If no sleeves 232 are slid, no rotations are transmitted to the main shaft 307 in the main transmission 301.

The transmission range 303 has a planetary gear set. A sun gear 308 positioned at the center of the planetary gear set is fixed to the main shaft 307, a carrier 310 coaxially holding the planetary gears 309 disposed around the sun gear 308 is fixed to an output shaft 311, and the rotation of the main shaft 307 can be transmitted to the output shaft 311 at the transmission ratio L or H of the range gear by switching the coupling of a ring gear 312 disposed around the planetary gears 309 between splines 324 extending from the transmission housing and splines 325 extending from the output shaft 311.

Numeral 313 denotes a counter shaft brake, and numeral 314 denotes a counter shaft speed sensor. These components are used for synchronizing the speed of the dog gears on the main shaft to the speed of the sleeves, in an electronic synchronization control that replaces the mechanical synchronization control.

The pneumatic cylinder system 202 includes a splitter cylinder 330 whose stroke is controlled by three electromagnetic valves, a select cylinder 340 whose stroke is controlled by three electromagnetic valves, a sleeve shift cylinder 350 whose stroke is controlled by two electromagnetic valves, a range cylinder 360 whose stroke is controlled by two electromagnetic valves, and a counter shaft brake cylinder 313 which is turned on and off with one electromagnetic valve 371, and the combined operation of these electromagnetic valves selectively actuates the various parts and portions of the multi-speed transmission system 201. Numeral 380 denotes an air source.

In the splitter cylinder 330, the electromagnetic valve MVH is connected to the cylinder base, the electromagnetic valve MVF is connected to the cylinder body, and the electromagnetic valve MVG is connected to the cylinder top, a head 331 provided with rods on both sides is accommodated in the cylinder body, and another head 332 without rods is accommodated in the cylinder base.

The splitter cylinder 330 operates as follows: When only the electromagnetic valve MVF is actuated, then the head 331 moves toward the cylinder head (to the right in Fig. 3) so that in the splitter 302 the splitter sleeve 319 linked to the rod 333 moves into L position. When only the electromagnetic valve MVG is actuated, then the head 331 moves toward the cylinder base (to the left in Fig. 3) so that the splitter sleeve 319 moves into H position. When the electromagnetic valves MVG and MVH are actuated, then the other head 332 moves toward the cylinder body so that a movement of the head 331 toward the cylinder base is checked by its left rod and stopped at an intermediate position. As a result, the splitter sleeve 319 stops at a neutral position.

In the select cylinder 340 the electromagnetic valve MVE is connected to the cylinder base, the electromagnetic valve MVD is connected to the cylinder body, and the electromagnetic valve MVC is connected to the cylinder head. A head 341 provided with rods on both sides is accommodated in the cylinder body, and another head 342 without rods is accommodated in the cylinder base.

The select cylinder 340 operates as follows: When only the electromagnetic valve MVD is actuated, then the head 341 moves toward the cylinder head (downward in Fig. 3) so that the selector 391 linked to the rod 343 moves to the N3 position of the shifter 392. From N3 position, the main gear transmission 301 can be put into 3rd or 4th gear. When only the electromagnetic valve MVC is actuated, then the head 341 moves toward the cylinder base (upward in the drawing) so that the selector 391 moves to the N1 position of the shifter 393. From N1 position, the main gear transmission 301 can be put into the reverse gear. When the electromagnetic valves MVC and MVE are operated, the other head 342 moves toward the cylinder body so that a movement of the head 341 toward the cylinder base is checked by the rod and stopped at an intermediate position, and the selector 391 stops at the N2 position of the shifter 294. From the N2 position, the main gear transmission 301 can be put into 1st or 2nd gear.

In the sleeve shift cylinder 350, the electromagnetic valve MVB is connected to the cylinder head, and the electromagnetic valve MVA is connected to the cylinder base. A single head 351 provided with a single rod 352 is accommodated in the cylinder body.

The sleeve shift cylinder 350 operates as follows: When only the electromagnetic valve MVA is actuated, then the head 351 moves toward the cylinder head (to the left in Fig. 3), so that the selector 391 linked to the rod 352 moves toward the direction of the reverse, 2nd and 4th (to the left in the drawing). When only the electromagnetic valve MVB is actuated, then the head 351 moves toward the cylinder base (to the right in Fig. 3) so that the selector 391 moves to the direction of the 1st and 3rd gears. When the electromagnetic valves MVA and MVB are operated, the head 351 is in neutral position, and the selector 391 is also in neutral position.

The shifters 393, 394 and 392 are coupled to the corresponding sleeves 323 of the main transmission 301. If the select cylinder 340 moves the selector 391 into one of the positions N1, N2 and N3 and then the sleeve shift cylinder 350 moves the selector 391 right or left in Fig. 3, a desired sleeve 323 meshes with a desired dog gear 321 so that the main transmission 301 can be changed into the first, second, third or fourth forward gear and the reverse gear. Moreover, it is possible to put the main transmission 301 into neutral by putting the selector 391 into neutral position.

In the range shift cylinder 360, the electromagnetic valve MVI is connected to the cylinder head, and the electromagnetic valve MVJ is connected to the cylinder base. A single head 361 provided with a rod 362 is accommodated in the cylinder body.

The range shift cylinder 360 operates as follows: When only the electromagnetic valve MVI is actuated, then the head 361 moves toward the cylinder base (to the right in Fig. 3), so that the range sleeve 326 of the range 303 coupled to the rod 362 moves into H position. When only the electromagnetic valve MVJ is actuated, then the head 361 moves toward the cylinder head (to the left in Fig. 3) so that the range sleeve 326 moves into L position.

By selectively turning the electromagnetic valves of this pneumatic cylinder system 202 on and off in combination, the multi-speed transmission system 201 can be switched to 16 forward speed positions and two reverse speed positions, as well as the splitter neutral position and the main transmission neutral position.

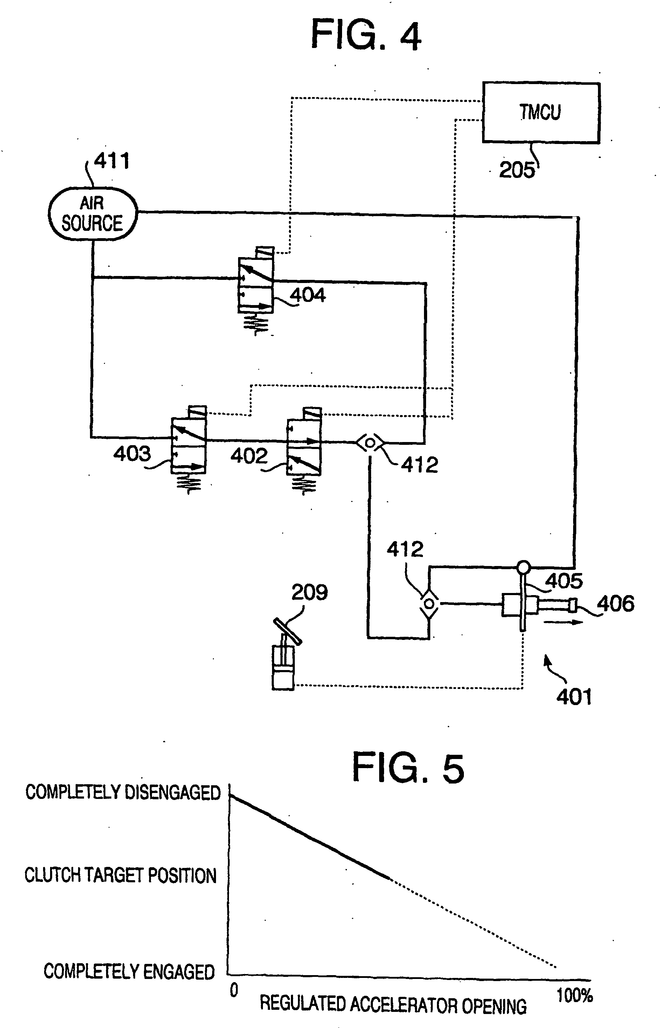

The configuration of the actuator system for clutch disengagement and engagement will be described with reference to Fig. 4.

This actuator system includes a clutch booster 401 which constitutes the actuator 212 (Fig. 2) for engaging and disengaging the clutch, a proportional valve 402 which pneumatically gives a stroke amount to this clutch booster 401, an on/off valve 403 located upstream of the proportional valve to block air supply, an emergency valve 404 for forcibly disengaging the clutch completely, and the clutch pedal 209 which hydraulically drives a relay piston 405 of the clutch booster 401. Numeral 411 denotes an air source, and numeral 412 denotes a double-check valve. The clutch booster 401 causes a member 406 to stroke, in proportion to the supplied air, and this member 406 is coupled with the pressure plate of the clutch 304 (Fig. 3).

The following describes how the actuator system in Fig. 4 operates.

When the main power source is turned on with the vehicle's key switch, the controller (TMCU) 205 turns on the valve 403 and allows air supply to the proportional valve 402. When the main power source is turned off, the controller 205 turns off the valve 403 and prevents a drop of the pressure in the air source 411 due to draining of air from the proportional valve 402. When the clutch is disengaged and engaged, the controller 205 provides a control current to the proportional valve 402. The proportional valve 402 supplies air to the clutch booster 401 in an amount that is proportional to the current, so that any clutch position from clutch complete disengagement to complete engagement can be regulated with the current. Consequently, it is possible to perform a finely tuned control, such as partly engaged condition, with the controller 205. The emergency valve 404 can completely disengage the clutch 304 quickly, and is used to prevent a jerking forward of the vehicle in extra-ordinary circumstances. The emergency valve 404 is turned on and off by the controller 205, but it can also be actuated manually with an emergency switch (not shown). When the clutch pedal 209 is pushed down by a driver's foot, the member 406 is pushed outward by hydraulic pressure, and the relay piston 405 is driven whereby air is supplied to the clutch booster 401, and helps and supports the stroke of the member 406.

Referring back to Fig. 3, "vehicle start preparation", "vehicle start stand-by", and "vehicle start" with the automatic clutch function and automatic transmission (speed change) function will be described.

In the automatic speed change mode, when the gear change lever 207 in Fig. 2 is put into D position or reverse position while the vehicle speed is zero (which means that the vehicle speed based on the speed of the output shaft 311 detected by the output shaft speed sensor 204 is 0km/h), then, as the vehicle start preparation, the controller 205 sets the optimum gear speed for starting off the vehicle as the target gear speed while the clutch 304 is disengaged by the actuator system of Fig. 4, and the multi-speed transmission system 201 switches the start gear speed to the target gear speed by regulating the pneumatic cylinder system 202 accordingly. When this vehicle start preparation is complete, the vehicle then goes into the start stand-by condition, which means that the vehicle speed is still zero, and a certain start gear speed has been selected for the gear position of the multi-speed transmission system 201. In this vehicle start stand-by condition, if the engine speed detected by the engine speed detection means 203 is higher than a predetermined speed, then the clutch engaging control is not carried out. The engine speed is lowered below the predetermined speed by holding the engine's accelerator opening for a predetermined time at 0%, after which the clutch engaging control becomes possible with the actuator of Fig. 4.

Subsequently, the clutch engagement is performed. Specifically, the controller 205 changes the regulation target of the clutch and the regulated accelerator opening notified to the engine by the controller 211 along the control curve shown in Fig. 5. That is to say, starting with a regulated accelerator opening of 0%, the accelerator opening is gradually increased, and also the regulation target of the clutch starts at a position of complete disengagement and is gradually changed toward an engaging position. By driving the proportional valve 402 of Fig. 4 in correspondence to the changing clutch regulation target, the clutch position is gradually changed to engaging. Eventually, the vehicle starts moving so that the regulated accelerator opening switches from the control curve in Fig. 5 to a value corresponding to the accelerator opening requested depending on the amount the accelerator pedal has been pushed down.

Thus, a smooth start is achieved with the automatic clutch function, and the pushing of the accelerator pedal can be reflected quickly in the acceleration, so that a calm vehicle start is possible.

It should be noted that after the predetermined time has elapsed, the clutch engaging control may be enabled even when the engine speed has not been lowered below the predetermined speed.

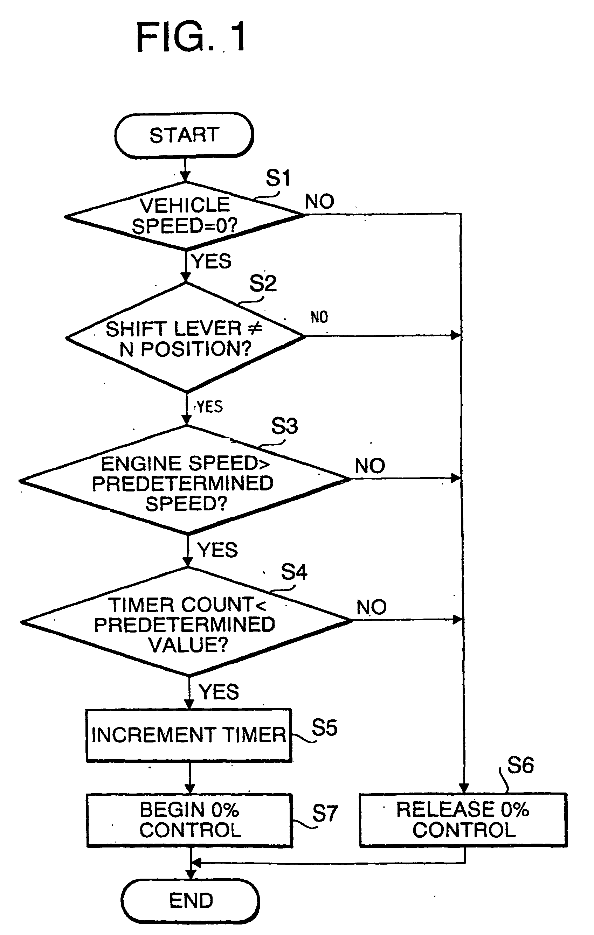

The following is a detailed description of the procedure of prohibiting vehicle start, with reference to Fig. 1.

First of all, in Step S1, based on the speed of the output shaft 311 detected by the output speed sensor 204, it is determined whether the vehicle speed is 0km/h. If the vehicle speed is not 0km/h, then the driving control should be performed, so that this procedure is unnecessary, and the program advances to Step S6 and is terminated. If the vehicle speed at Step S1 is 0km/h, then the program advances to Step S2, and it is determined whether the gear change lever is in a position other than the neutral (N). If the gear change lever at Step 2 is in the N position, then the start prohibition procedure is unnecessary, so that the program advances to Step S6 and is terminated. If the gear change lever is not in the N position at Step S2, then the automatic clutch function is in operation and the vehicle is about to start moving, so that the program advances to Step S3, and it is determined whether the engine speed detected by the engine speed sensor 203 is higher than a predetermined speed (for example, set to 700rpm; idling speed set to 500rpm). If the engine speed is lower than the predetermined speed, then a smooth start in a regular start motion is possible, so that the program advances to Step S6 and is terminated.

If the engine speed at Step S3 is higher than the predetermined speed, then the program advances to Step S4, and it is determined whether the time indicated by a timer has not reached a predetermined value (for example, 5sec). The timer starts counting the time when a start gear is selected. Consequently, at first, the time indicated by the timer is lower than the predetermined value. If the time indicated by the timer at Step S4 is lower than the predetermined value, then the procedure advances to Step S5, and the timer is incremented (that is, one unit is added). The timer sums up the time at intervals that correspond to the interrupt time interval of this procedure. Then, in Step S7, the 0% accelerator opening regulation for holding the regulated accelerator opening at 0% begins. If the regulated accelerator opening is held at 0%, the regulation target of the clutch is held at a position of complete disengagement, in accordance with the control chart in Fig. 5, so that the clutch engaging control is effectively prohibited, and the start of the vehicle is deferred.

Eventually, the engine speed drops below the predetermined speed (No at Step S3), and the program advances to Step S6. At Step S6, the 0% accelerator opening regulation is released. Thus, the clutch engaging control becomes possible. Because the engine speed is now lower than the predetermined speed, a smooth start is performed in a regular start motion.

It is possible that the time indicated by the timer exceeds the predetermined value, while the engine speed is still faster than the predetermined speed. Usually, when the accelerator opening is narrowed to 0%, the engine should return to idling speed within 5sec, even if the engine was at the highest speed. If the engine speed does not decrease below the predetermined speed even after the predetermined time has passed, then this may be because the idling speed is for some reason made higher than normal. In this case, in order to allow driving as soon as possible, the 0% accelerator opening regulation should be released to get out of the situation of deferred start. To do this, if the predetermined time has elapsed in Step S4, the program advances to Step S6 in this embodiment. At Step S6, the 0% accelerator opening regulation is released, and the clutch engaging control becomes possible, so that the vehicle starts moving as in a regular start.

## Claims

1. A vehicle clutch control device comprising:
a clutch actuator unit (212, 205) for engaging and disengaging a friction clutch (304); and
a prohibition control unit (205) for prohibiting the clutch actuator unit (212) from engaging the clutch (304) when all the following conditions are fulfilled: the vehicle speed is zero, a start gear has been selected, and the rotational speed of the engine (222) is higher than a predetermined speed.

2. The vehicle clutch control device of Claim 1, **characterized in that** the prohibition control unit (205) also causes the engine rotational speed to drop below the predetermined speed when it prohibits the clutch actuator unit (212) from engaging the clutch (304).

3. The vehicle clutch control device of Claim 2, **characterized in that** the prohibition control unit (205) allows the clutch actuator unit (212) to engage the clutch (304) when the engine rotational speed drops below the predetermined speed.

4. The vehicle clutch control device of Claim 2 or 3, **characterized in that** the prohibition control unit (205) holds an accelerator opening of the engine (222) to a predetermined value until the engine rotational speed drops below the predetermined speed.

5. The vehicle clutch control device of Claim 1, **characterized in that** the prohibition control unit holds an accelerator opening of the engine (222) to a predetermined value for a prescribed period after it prohibits the clutch actuator unit (212) from engaging the clutch (304).

6. The vehicle clutch control device of Claim 5, **characterized in that** the prohibition control unit (205) allows the clutch actuator unit (212) to engage the clutch (304) after the prescribed period regardless of the engine rotational speed.

7. The vehicle clutch control device according to any one of foregoing claims, **characterized in that** the predetermined speed is about 700 rpm.

8. The vehicle clutch control device of Claim 5, 6 or 7, **characterized in that** the prescribed period is about 5 seconds.

9. The vehicle clutch control device according to any one of Claims 4 to 8, **characterized in that** the prescribed value is 0%.

10. The vehicle clutch control device of Claim 9, **characterized in that** the prohibition control unit (205) causes the clutch actuator unit (212) to completely disengage the clutch (304) when the accelerator opening of the engine is 0%.

## Patentansprüche

1. Fahrzeug-Kupplungssteuerungsvorrichtung, die Folgendes umfasst:
eine Kupplungs-Betätigungseinheit (212, 205) zum Kuppeln und Entkuppeln einer Reibungskupplung (304); und
eine Verhinderungs-Steuerungseinheit (205) zum Verhindern, dass die Kupplungs-Betätigungseinheit (212) die Kupplung (304) kuppelt, wenn sämtliche der folgenden Bedingungen erfüllt sind:
die Fahrzeuggeschwindigkeit ist Null, ein Start-Gang wurde ausgewählt, und die Drehzahl des Motors (222) ist höher als eine vorbestimmte Drehzahl.

2. Fahrzeug-Kupplungssteuerungsvorrichtung nach Anspruch 1, **dadurch gekennzeichnet, dass** die Verhinderungs-Steuerungseinheit (205) außerdem veranlasst, dass die Motor-Drehzahl unter die vorbestimmte Drehzahl absinkt, wenn sie die Kupplungs-Betätigungseinheit (212) daran hindert, die Kupplung (304) zu kuppeln.

3. Fahrzeug-Kupplungssteuerungsvorrichtung nach Anspruch 2, **dadurch gekennzeichnet, dass** die Verhinderungs-Steuerungseinheit (205) es gestattet, dass die Kupplungs-Betätigungseinheit (212) die Kupplung (304) kuppelt, wenn die Motordrehzahl unter die vorbestimmte Drehzahl absinkt.

4. Fahrzeug-Kupplungssteuerungsvorrichtung nach Anspruch 2 oder 3, **dadurch gekennzeichnet, dass** die Verhinderungs-Steuerungseinheit (205) die Öffnung eines Accelerators des Motors (222) auf einen vorbestimmten Wert hält, bis die Motordrehzahl unter die vorbestimmte Geschwindigkeit absinkt.

5. Fahrzeug-Kupplungssteuerungsvorrichtung nach Anspruch 1, **dadurch gekennzeichnet, dass** die Verhinderungs-Steuerungseinheit die Öffnung eines Accelerators des Motors (222) auf einen vorbestimmten Wert für eine vorgeschriebene Zeitspanne hält, nachdem sie verhindert, dass die Kupplungs-Betätigungseinheit (212) die Kupplung (304) kuppelt.

6. Fahrzeug-Kupplungssteuerungsvorrichtung nach Anspruch 5, **dadurch gekennzeichnet, dass** die Verhinderungs-Steuerungseinheit (205) es gestattet, dass die Kupplungs-Betätigungseinheit (212) die Kupplung (304) nach der vorgeschriebenen Zeitspanne kuppelt, unabhängig von der Motordrehzahl.

7. Fahrzeug-Kupplungssteuerungsvorrichtung nach einem der vorhergehenden Ansprüche, **dadurch gekennzeichnet, dass** die vorbestimmte Drehzahl ungefähr 700 U/min beträgt.

8. Fahrzeug-Kupplungssteuerungsvorrichtung nach Anspruch 5, 6 oder 7, **dadurch gekennzeichnet, dass** die vorgeschriebene Zeitspanne ungefähr 5 Sekunden beträgt.

9. Fahrzeug-Kupplungssteuerungsvorrichtung nach einem der Ansprüche 4 bis 8, **dadurch gekennzeichnet, dass** der vorgeschriebene Wert 0 % beträgt.

10. Fahrzeug-Kupplungssteuerungsvorrichtung nach Anspruch 9, **dadurch gekennzeichnet, dass** die Verhinderungs-Steuerungseinheit (205) veranlasst, dass die Kupplungs-Betätigungseinheit (212) die Kupplung (304) vollständig entkuppelt, wenn die Öffnung des Accelerators des Motors 0 % beträgt.

## Revendications

1. Dispositif de commande d'embrayage de véhicule, comprenant :
une unité d'actionnement d'embrayage (212, 205) destinée à s'engager avec un embrayage à friction (304) et à se désengager de celui-ci ; et
une unité de commande d'interdiction (205) destinée à interdire à l'unité d'actionnement d'embrayage (212) de s'engager avec l'embrayage (304) lorsque toutes les conditions suivantes sont remplies : la vitesse du véhicule est nulle, un rapport de démarrage a été sélectionné, et la vitesse de rotation du moteur (222) est supérieure à une vitesse prédéterminée.

2. Dispositif de commande d'embrayage de véhicule selon la revendication 1, **caractérisé en ce que** l'unité de commande d'interdiction (205) fait également chuter la vitesse de rotation du moteur au-dessous de la vitesse prédéterminée lorsqu'elle interdit à l'unité d'actionnement d'embrayage (212) de s'engager avec l'embrayage (304).

3. Dispositif de commande d'embrayage de véhicule selon la revendication 2, **caractérisé en ce que** l'unité de commande d'interdiction (205) permet à l'unité d'actionnement d'embrayage (212) de s'engager avec l'embrayage (304) lorsque la vitesse de rotation du moteur chute au-dessous de la vitesse prédéterminée.

4. Dispositif de commande d'embrayage de véhicule selon la revendication 2 ou 3, **caractérisé en ce que** l'unité de commande d'interdiction (205) maintient une ouverture d'accélérateur du moteur (222) à une valeur prédéterminée jusqu'à ce que la vitesse de rotation du moteur chute au-dessous de la vitesse prédéterminée.

5. Dispositif de commande d'embrayage de véhicule selon la revendication 1, **caractérisé en ce que** l'unité de commande d'interdiction maintient une ouverture d'accélérateur du moteur (222) à une valeur prédéterminée pendant une période prescrite après avoir interdit à l'unité d'actionnement d'embrayage (212) de s'engager avec l'embrayage (304)

6. Dispositif de commande embrayage de véhicule selon la revendication 5, **caractérisé en ce que** l'unité de commande d'interdiction (205) permet à l'unité d'actionnement d'embrayage (212) de s'engager avec l'embrayage (304) après la période prescrite quelle que soit la vitesse de rotation du moteur.

7. Dispositif de commande d'embrayage de véhicule selon l'une quelconque des revendications précédentes, **caractérisé en ce que** la vitesse prédéterminée est d'environ 700 tours par minute.

8. Dispositif de commande d'embrayage de véhicule selon la revendication 5, 6 ou 7, **caractérisé en ce que** la période prescrite est d'environ 5 secondes.

9. Dispositif de commande d'embrayage de véhicule selon l'une quelconque des revendications 4 à 8, **caractérisé en ce que** la valeur prescrite est de 0%.

10. Dispositif de commande d'embrayage de véhicule selon la revendication 9, **caractérisé en ce que** l'unité de commande d'interdiction (205) commande à l'unité d'actionnement d'embrayage (212) de se désengager totalement de l'embrayage (304) lorsque l'ouverture d'accélérateur du moteur est de 0%.
